# EUROPÄISCHE PATENTANMELDUNG

(11) **EP 1 964 608 A1**
(43) Veröffentlichungstag der Anmeldung: **03.09.2008**
(21) Anmeldenummer: 08151473.9
(22) Anmeldetag: 15.02.2008
(51) Int. Cl.: B01J 39/20, C08J 5/20

(54) **Monodisperse schwachsaure Kationenaustauscher**

(30) Priorität: 24.02.2007 DE 102007009072
(71) Anmelder: LANXESS Deutschland GmbH, 51369 Leverkusen (DE)
(72) Erfinder: Klipper, Reinhold, 50933, Köln (DE); Podszun, Wolfgang, 80469, Monheim (DE); Schelhaas, Michael, 50733, Köln (DE); Vanhoorne, Pierre, 40789, Monheim (DE); Soest, Hans-Karl, 51147, Köln (DE); Litzinger, Ulrich, 57627, Hachenburg (DE)
(74) Vertreter: Wichmann, Birgid

(57) **Zusammenfassung**

Der Gegenstand der vorliegenden Erfindung betrifft ein Verfahren zur Herstellung von neuen, monodispersen Kationenaustauschern vom Poly(meth)acrylsäure-Typ, die Ionenaustauscher selber sowie deren Verwendung sowie die Verwendung von Zwischenprodukten als Träger für Enyzme und die somit erhaltenen Systeme als Enzymkatalysatoren zur Brennstoffherstellung sowie in Umesterungsreaktionen und Veresterungsreaktionen.

## Beschreibung

Gegenstand der vorliegenden Erfindung ist ein Verfahren zur Herstellung monodisperser Kationenaustauscher vom Poly(meth)acrylsäure-Typ sowie deren Anwendungen als auch die Verwendung der bei der Synthese entstehenden Zwischenprodukte als Träger für Enzyme sowie deren Verwendung als Enzymkatalysatoren zur Brennstoffherstellung und in Umesterungsreaktionen und Veresterungsreaktionen.

Aus dem Stand der Technik sind bereits heterodisperse Kationenaustauscher vom Poly(meth)acrylsäure-Typ bekannt. Es handelt sich dabei um eine Klasse von Kationenaustauschern, die in der Praxis bei zahlreichen unterschiedlichen Anwendungen eingesetzt werden können.

Ein wichtiges Einsatzgebiet heterodisperser Kationenaustauscher vom Poly(meth)acrylsäure-Typ ist die Wasseraufbereitungstechnik, bei der mehrwertige Kationen wie beispielsweise Calcium, Magnesium, Blei oder Kupfer aber auch Carbonatanionen entfernt werden können.

Ein bekanntes Verfahren zur Herstellung heterodisperser Kationenaustauscher vom Poly(meth)-acrylsäure -Typ ist die Hydrolyse von vernetzten Perlpolymerisaten aus (Meth)acrylmonomeren mit Säuren oder Laugen gemäß DE 10 322 441 A1 (US = 2005 090 621 A1), DD 67583 oder US 5 369 132.

Die zur Hydrolyse eingesetzten vernetzten (Meth)acrylsäureester- oder (Meth)acrylnitrilharz-Perlpolymerisate werden im Stand der Technik als gelförmige oder makroporöse Harze hergestellt. Ihre Herstellung erfolgt durch Mischpolymerisation nach dem Suspensionspolymerisationsverfahren. Erhalten werden dabei heterodisperse Perlpolymerisate mit einer breiten Kornverteilung im Bereich von ca. 0,2 mm bis ca. 1,2 mm.

Die heterodispersen Kationenaustauscher vom Poly(meth)acrylsäure-Typ zeigen in Abhängigkeit von der Beladungsform des Harzes, d.h. je nach Art des Gegenions, unterschiedliche Harzvolumina. Beim Übergang von der freien Säureform in die Natriumform quillt das Harz deutlich auf. Umgekehrt schrumpft es beim Übergang von der Natrium- in die freie Säureform. Beim großtechnischen Einsatz dieser heterodispersen Kationenaustauscher vom Poly(meth)acrylsäure-Typ ist also jede Beladung und Regeneration mit einem Quellen bzw. Schrumpfen verbunden. Im Verlauf eines langfristigen Einsatzes werden aber diese heterodispersen Kationenaustauscher mehrere hundertmal regeneriert. Die dabei auftretenden Schrumpf- und Quellvorgänge beanspruchen die Perlen in ihrer Stabilität so stark, dass ein Teil der Perlen Risse erhält, um schließlich sogar zu zerspringen. Es entstehen Bruchstücke, die zu Verstopfungen in den Anwendungsapparaten, den Säulen führen, den Durchfluss behindern, was wiederum zu einem erhöhten Druckverlust führt. Ferner verunreinigen die Bruchstücke das zu behandelnde Medium, bevorzugt Wasser und mindern so die Qualität des Mediums bzw. des Wassers.

Der Durchfluss des Wassers durch eine mit Perlen gefüllte Säule wird aber nicht nur durch Harzbruchstücke sondern auch durch feine Perlpolymerisate behindert. Es kommt zu einem Anstieg des Druckverlustes. Bedingt durch die Kornverteilung enthält aber ein heterodisperser Kationenaustauscher vom Poly(meth)acrylsäure-Typ Perlen unterschiedlichen Durchmessers. Die Anwesenheit feiner Perlen erhöht somit zusätzlich den Druckverlust.

Nach beendeter Beladung der Kationenaustauscher vom Poly(meth)acrylsäure-Typ mit Kationen wird das Harz mit verdünnter Salzsäure regeneriert, um für eine neue Beladung bereit zu sein. Es werden Salzsäure-Reste mit Wasser aus dem Harz gewaschen. Es wird während der Produktion der Harze eine niedrige Leitfähigkeit des vom Harz abfließenden Wassers (Waschwassers) angestrebt, da ansonsten ein verunreinigtes Wasser vorliegt. Ziel ist das Erreichen niedriger Leitfähigkeiten mit kleinen Waschwassermengen.

Zur Reduzierung des Druckverlustes und zur Verbesserung der Auswaschbarkeit ist daher der Einsatz von Kationenaustauschern vom Poly(meth)acrylsäure-Typ mit engverteilten Korngrößen wünschenswert.

Derartige engverteilte Kationenaustauscher vom Poly(meth)acrylsäure-Typ im Bereich 30 bis 500 µm werden üblicherweise durch Fraktionieren von Kationenaustauschern vom Poly(meth)acrylsäure-Typ mit breiter Teilchengrößenverteilung erhalten. Nachteilig bei diesem Verfahren ist, dass mit steigender Monodispersität die Ausbeute der erwünschten Zielfraktion bei der Fraktionierung stark abnimmt. Auch wird die mechanische bzw. osmotische Stabilität der so gewonnenen Kationenaustauscher nicht verbessert.

Aus DE 10 237 601 A1 (= WO 2004 022 611 A1) sind monodisperse gelförmige Ionenaustauscher mit einem Durchmesser von bis zu 500 µm bekannt, die aus monodispersen, gelförmigen Perlpolymerisaten hergestellt werden, die 50 bis 99,9 Gew.-% Styrol und als Comonomere copolymerisierbare Verbindungen wie z.B. Methylmethacrylat, Ethylmethacrylat, Ethylacrylat, Hydroxyethylmethacrylat oder Acrylnitril enthalten. Beim Verfahren gemäß DE 10 237 601 A1 werden unvernetzte Saatpolymerisate verwendet. Nach Hydrolyse der monodispersen, gelförmigen Perlpolymerisate sind Kationenaustauscher erhältlich, die funktionelle Gruppen vom Poly-(meth)acrylsäure-Typ aufweisen. Durch den hohen Gehalt nicht-funktionnellen Styrols ist die Totalkapazität (Anzahl der funktionellen Gruppen pro Volumeneinheit des Harzes in Eq./Liter) solcher Kationenaustauscher begrenzt und für die meisten Anwendungen unzureichend.

Ausgehend vom Stand der Technik bestand die Aufgabe der vorliegenden Erfindung darin, Kationenaustauscher vom Poly(meth)acrylsäure-Typ mit hoher mechanischer als auch osmotischer Stabilität der Perlen, niedrigem Druckverlust des Perlbettes in der Anwendung sowie niedrigem Waschwasserbedarf des Kationenaustauschers selber bereitzustellen.

Gegenstand der vorliegenden Erfindung und Lösung dieser Aufgabe ist deshalb ein Verfahren zur Herstellung von Kationenaustauschern vom Poly(meth)acrylsäure-Typ dadurch gekennzeichnet, dass man
a) verkapselte, perlförmige Monomertropfen in einer kontinuierlichen, vorzugsweise wässrigen Phase bereitstellt und gegebenenfalls diese Phase auf Temperaturen ≥ 50°C erwärmt, wobei Polymerisation eintreten kann,
b) diese verkapselten perlförmigen Monomertropfen mit Mischungen aus (Meth)-acrylmonomeren, Vernetzern, Initiatoren und gegebenenfalls Porogenen gegebenenfalls unter Polymerisationsbedingungen versetzt, wobei die Mischung in die verkapselten Tropfen eindringt und im Falle des Zusatzes unter Polymerisationsbedingungen anpolymerisiert,
c) die verkapselten Tropfen bei erhöhter Temperatur polymerisiert und
d) das entstandene, vernetzte (Meth)acrylperlpolymerisat mit Säuren oder Laugen zu einem vernetzten Perlpolymerisat vom Poly(Meth)acrylsäure-Typ hydrolysiert.

In einer Ausführungsvariante der vorliegenden Erfindung können die Schritte b) und c) ein oder mehrmals wiederholt werden. Verfährt man in Schritt a) in der Weise, dass man auf Temperaturen von ≥ 50°C erwärmt und die Zugabe der Komponenten in Schritt b) unter Polymerisationsbedingungen erfolgt, spricht man von sogenannten in situ seed/feed Verfahren.

Kennzeichnend für das in situ seed/feed Verfahren ist die Zugabe der Monomeren/des Monomergemisches zu den verkapselten Monomertropfen unter Polymerisationsbedingungen.

Die in Schritt a) einzusetzenden verkapselten, perlförmigen Monomertropfen werden bevorzugt in monodisperser Form bzw. Teilchengrößenverteilung eingesetzt, wozu sie durch Kombination von Verdüsung (Jetting) und Mikroverkapselung erzeugt werden.

Als Maß für die Breite der Teilchengrößenverteilung der erfindungsgemäßen monodispersen Kationenaustauscher von (Meth)acrylsäure-Typ wird das Verhältnis aus dem 90 %-Wert (∅(90)) und dem 10 %-Wert (∅(10)) der Volumenverteilung gebildet. Der 90 %-Wert (∅(90)) gibt den Durchmesser an, der von 90 % der Teilchen unterschritten wird. In entsprechender Weise unterschreiten 10 % der Teilchen den Durchmesser des 10 %-Wertes (∅(10)). Monodisperse Teilchengrößenverteilungen im Sinne der vorliegenden Anmeldung bedeuten ∅(90)/∅(10) *≤* 1,5, vorzugsweise ∅(90)/∅(10) *≤* 1,25.

Erfindungsgemäße Kationenaustauscher vom Poly(meth)acrylsäure-Typ sind schwachsauer und enthalten polymerisierte Einheiten von Acrylsäure bzw. Methacrylsäure.

Erfindungsgemäß bevorzugt werden Methoden, bei denen die Monodispersität im Herstellprozess selbst eingestellt wird. Beim Verdüsungsverfahren bzw. beim "Jetten" wird eine Monomermischung bestehend aus einem oder mehreren verschiedenen Vinyhnonomer(en) sowie einem oder mehreren Vernetzer(n) und einem oder mehreren Initiator(en) in eine mit der Monomermischung im wesentlichen nicht mischbare Flüssigkeit eingedüst, wobei Tröpfchen einheitlicher Teilchengröße gebildet werden. Durch die Anwendung einer Longitudinal-Schwingung geeigneter Frequenz kann die Ausbildung von monodispersen Tröpfchen unterstützt werden. Die Schwingungsanregung kann durch Einwirkung periodischer Druckschwankungen, wie Schallwellen geschehen. Weitere Einzelheiten zur Schwingungsanregung werden in EP 0 046 535 A2 beschrieben.

Gemäß der vorliegenden Erfindung werden die durch Verdüsung und/oder Schwingungsanregung erzeugten monodispersen Tröpfchen mikroverkapselt. Auf diese Weise ist es möglich, Perlpolymerisate mit besonders hoher Monodispersität zu erzeugen.

Für die Verkapselung der Monomertröpfchen, auch als Mikroverkapselung bezeichnet, kommen bevorzugt die für den Einsatz als Komplexkoazervate bekannten Materialien in Frage, insbesondere Polyester, natürliche oder synthetische Polyamide, Polyurethane, Polyharnstoffe.

Als natürliches Polyamid ist beispielsweise Gelatine besonders gut geeignet. Diese kommt insbesondere als Koazervat oder Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid oder Methacrylamid. Besonders bevorzugt werden Acrylsäure oder Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP 0 046 535 A3 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wässrigen Phase gelösten Reaktivkomponente (beispielsweise einem Amin), zur Reaktion gebracht wird.

Die verkapselten, perlförmigen Monomertropfen aus Verfahrensschritt a) können im wesentlichen eine Mischung aus monoethylenisch ungesättigten Verbindungen, einer polyvinylaromatischen Verbindung, einem oder mehreren Initiatoren und gegebenenfalls einem oder mehreren Porogenen enthalten.

Als monoethylenisch ungesättigte Verbindungen werden bevorzugt Styrol, Vinyltoluol, Ethylstyrol, α-Methylstyrol, Chlorstyrol, Chlormethylstyrol, (Meth)acrylsäure,(Meth)acylnitril, Acrylsäurealkylester und Methacrylsäurealkylester eingesetzt.

Unter (Meth)acrylester werden die Ester der Acrylsäure und Methacrylsäure verstanden. Bevorzugt werden Ethylacrylat, Methylacrylat, n-Butylacrylat, t-Butylacrylat, 2-Ethylhexylacrylat, Benzylacrylat, Ethylmethacrylat, Methylmethacrylat, n-Butylmethacrylat, t-Butylmethacrylat, 2-Ethylhexylmethacrylat oder n-Hexylmethacrylat eingesetzt. Besonders bevorzugt werden Methylmethacrylat, n-Butylmethacrylat und Methylacrylat eingesetzt.

Die verkapselten perlförmigen, Monomertropfen aus Verfahrensschritt a) enthalten bevorzugt 0,05 bis 80 Gew.-%, besonders bevorzugt 0,1 bis 30 Gew.-% Vernetzer. Geeignete Vernetzer für die vernetzten Perlpolymerisate sind multifunktionelle ethylenisch ungesättigte Verbindungen, bevorzugt Butadien, Isopren, Divinylbenzol, Divinyltoluol, Trivinylbenzol, Divinylnaphtalin, Trivinylnaphtalin, Divinylcyclohexan, Trivinylcyclohexan, Triallycyanurat, Triallylamin, 1,7-Octadien, 1,5-Hexadien, Cyclopentadien, Norbornadien, Diethylenglykoldivinylether, Triethylenglykoldivinylether, Tetraethylenglykoldivinylether, Butandioldivinylether, Ethylenglycoldivinylether, Cyclohexandimethanoldivinylether, Hexandioldivinylether oder Trimethylolpropantrivinylether. Insbesondere Divinylbenzol (DVB) ist in vielen Fällen geeignet. Kommerzielle Divinylbenzolqualitäten, die neben den Isomeren des Divinylbenzols auch Ethylvinylbenzol enthalten, sind ausreichend. Es können auch Mischungen unterschiedlicher Vernetzer, z.B. Mischungen aus Divinylbenzol und Divinylether eingesetzt werden.

Im Verfahrensschritt b) werden die verkapselten perlförmigen, Monomertropfen mit (Meth)-acrylmonomeren, geeigneten Vernetzern, Initiatoren und gegebenenfalls Porogenen versetzt.

Unter (Meth)acrylmomonomere werden im vorliegenden Zusammenhang bevorzugt (Meth)acrylester, (Meth)acrylamide, (Meth)acrylnitril, Acrylsäure, Methacrylsäure, Acrylsäurechlorid oder Methacrylsäurechlorid allein oder im Gemisch verstanden. Unter (Meth)acrylamide werden bevorzugt substituierte und nicht substituierte Amide der Acrylsäure und Methacrylsäure verstanden. Besonders bevorzugt werden Acrylamid, Methacrylamid, Dimethylacrylamid, Dimethylmethacrylamid, Diethylacrylamid oder Diethylmethacrylamid eingesetzt. Inbesondere bevorzugt werden Acrylamid und Methacrylamid. (Meth)acrylnitril umfasst Acrylnitril und Methacrylnitril. Besonders bevorzugt wird im Sinne der vorliegenden Erfindung Acrylnitril und Acrylsäuremethylester eingesetzt.

Vernetzer im Verfahrensschritt b) im Sinne der vorliegenden Erfindung sind die unter Verfahrensschritt a) bereits beschriebenen Vernetzer.

Der Anteil des Vernetzers in der Gesamtmenge an Monomeren gebildet aus verkapseltem Monomertropfen und dosiertem Monomergemisch beträgt bevorzugt 2 bis 50 Gew.-%, besonders bevorzugt 4 bis 20 Gew.-%, ganz besonders bevorzugt 4 bis 10 Gew.-%.

Für das erfindungsgemäße Verfahren geeignete Initiatoren sind bevorzugt Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azo-bis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Als weitere Zusätze in dem Monomergemisch bzw. den verkapselten Monomertropfen aus monoethylenisch ungesättigten Verbindungen, geeigneten Vernetzern und Initiatoren können Porogene verwendet werden, um im kugelförmigen Polymerisat eine makroporöse Struktur zu erzeugen. Hierfür sind organische Lösungsmittel geeignet, die sich mit den monoethylenisch ungesättigten Verbindungen (Meth)acrylmonomeren mischen. Bevorzugt werden Hexan, Cyclohexan, Octan, Isooctan, Isododecan, Methylethylketon, Methylisobutylketon, n-Butanol- 2-Butanol, Isobutanol, t-Butanol, Octanol oder Methylisobutylcarbinol allein oder im Gemisch eingesetzt. Geeignete Porogene werden auch in DE-A 1 045 102, DE-A 1 113 570 und US-A 4 382 124 beschrieben.

Der für die Synthese erfindungsgemäßer makroporöser Kationenaustauscher eingesetzte Porogenanteil liegt bei 3 bis 200 Gew.-%, bevorzugt bei 5 bis 20 Gew.-%, bezogen auf das Monomergemisch. Das Porogen kann für die Synthese makroporöser Perlpolymerisate sowohl vor, als auch während der Polymerisation zugegeben werden.

Die Begriffe makroporös bzw. gelförmig sind in der Fachliteratur beispielsweise in Seidl, Malinsky, Dusek, Heitz, Adv. Polymer Sci., Vol. 5 Seiten 113 bis 213 (1967) eingehend beschrieben worden.

Die Zugabe des Monomerzulaufs zu den verkapselten Monomertropfen im Verfahrensschritt b) kann auch in der Weise erfolgen, dass zu einer wässrigen Dispersion der verkapselten Monomertropfen eine wässrige Emulsion des Monomerzulaufs zugesetzt wird. Gut geeignet sind feinteilige Emulsionen mit mittleren Teilchengrößen von 1 bis 10 µm, die mit Hilfe von Rotor-Stator-Mischern, Mischstrahldüsen oder Ultraschall-Dispergiergeräten unter Verwendung von Emulgierhilfsmitteln, wie z.B. Sulfobernsteinsäureisooctylester-Natriumsalz, hergestellt werden können.

Im Verfahrensschritt c) werden die monodispersen (Meth)acrylperlpolymerisate bei erhöhter Temperatur durch Polymerisation des entsprechenden Monomergemisches, in einer wässrigen Phase erzeugt. Erhöhte Temperaturen im Sinne der vorliegenden Erfindung sind 50-140°C, bevorzugt 60-135°C.

Dabei kann in einer alternativen Ausführungsform die wässrige Phase einen gelösten Polymerisationsinhibitor enthalten. Als Inhibitoren kommen sowohl anorganische als auch organische Stoffe in Frage. Bevorzugte anorganische Inhibitoren sind Stickstoffverbindungen wie Hydroxylamin, Hydrazin, Natriumnitrit, Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid oder Ammoniumrhodanid. Bevorzugte organische Inhibitoren sind phenolische Verbindungen wie Hydrochinon, Hydrochinonmonomethylether, Resorcin, Brenzkatechin, tert.-Butylbrenzkatechin, Pyrogallol oder Kondensationsprodukte aus Phenolen mit Aldehyden. Weitere bevorzugte organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Di-allcylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt bevorzugt 5 bis 1000 ppm (bezogen auf die wässrige Phase), besonders bevorzugt 10 bis 500 ppm, ganz besonders bevorzugt 10 bis 250 ppm.

Die Polymerisation des Monomergemisches erfolgt gegebenenfalls in Anwesenheit eines oder mehrerer Schutzkolloide in der wässrigen Phase. Als Schutzkolloide werden bevorzugt natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern eingesetzt. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders bevorzugt sind Gelatine oder Methylhydroxyethylcellulose. Die Einsatzmenge der Schutzkolloide beträgt bevorzugt 0,05 bis 1 Gew.-% bezogen auf die wässrige Phase, besonders bevorzugt 0,05 bis 0,5 Gew.-%.

Die Polymerisation zum monodispersen vernetzten (Meth)acrylpolymerisat kann gegebenenfalls auch in Anwesenheit eines Puffersystems durchgeführt werden. Bevorzugt werden Puffersysteme, die den pH-Wert der wässrigen Phase zu Beginn der Polymerisation auf einen Wert zwischen 14 und 6, besonders bevorzugt zwischen 13 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 bis 500 mmol/l, vorzugsweise 2,5 bis 100 mmol/l.

Die Rührgeschwindigkeit bei der Polymerisation ist weniger kritisch und hat im Gegensatz zur herkömmlichen Perlpolymerisation kaum Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von der Summe aus Saat-Perlpolymerisat und Monomergemisch zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt bevorzugt zwischen 50 bis 180°C, besonders bevorzugt zwischen 55 und 130°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Perlpolymerisat mit üblichen Methoden, beispielsweise durch Filtrieren oder Dekantieren, isoliert und gegebenenfalls gewaschen.

Eine weitere Ausführungsform der vorliegenden Erfindung ist ein mehrstufiger Zulauf-Prozess entsprechend Verfahrensschritt d). Dabei wird das (Meth)acrylpolymerisat in mehreren Einzelschritten hergestellt. Zum Beispiel wird eine wässrige Suspension von verkapselten Monomertropfen auf der Basis von Styrol-Divinylbenzol erzeugt, dieses mit einem ersten Gemisch aus (Meth)acrylmonomeren, Vernetzer und Initiator versetzt und polymerisiert, wobei das Copolymerisat I erhalten wird. Das Copolymerisat I wird mit weiterer Monomermischung aus (Meth)acrylmonomeren, Vernetzer und Initiator versetzt und polymerisiert, wobei das erfindungsgemäße monodisperse vernetzte (Meth)acrylperlpolymerisat entsteht. Versetzen im Sinne der vorliegenden Erfindung bedeutet das englische Wort feeding, weshalb man auch statt versetzt "gefüttert" schreiben kann. Man spricht dabei von einem Saat-Zulaufverfahren oder seed/feed-Prozeß.

Die mittlere Teilchengröße der vernetzten (Meth)acryl-Perlpolymerisate aus Verfahrensschritt c) beträgt 10 - 1000 µm, vorzugsweise 100 - 1000 µm, besonders bevorzugt 200 bis 800 µm.

Im Verfahrensschritt d) des erfindungsgemäßen Verfahrens erfolgt die Hydrolyse des monodispersen vernetzten (Meth)acryl-Perlpolymerisats aus Verfahrensschritt c).

Geeignete Hydrolysemittel sind dabei starke Basen oder starke Säuren wie z. B. Natronlauge oder Schwefelsäure. Die Konzentration des Hydrolysemittels beträgt bevorzugt 5 bis 50 Gew.-%. Die Hydrolyse erfolgt bevorzugt bei Temperaturen von 50 °C bis 200 °C, besonders bevorzugt 80 °C bis 180 °C. Die Dauer der Hydrolyse beträgt bevorzugt 1 bis 24 h, besonders bevorzugt 1 bis 12 h.

Nach der Hydrolyse wird das Reaktionsgemisch aus Hydrolyseprodukt und restlichem Hydrolysemittel auf Raumtemperatur abgekühlt und zunächst mit Wasser verdünnt und gewaschen.

Bei Verwendung von Natronlauge als Hydrolysemittel fällt der schwachsaure Kationenaustauscher in der Natrium-Form an. Für manche Anwendungen ist es günstig, den Kationenaustauscher von der Natrium-Form in die saure Form zu überführen. Diese Umladung erfolgt bevorzugt mit Mineralsäuren wie Salzsäure oder mit Schwefelsäure einer Konzentration von 5 bis 50 %, vorzugsweise 10 bis 20 %.

Falls gewünscht kann der erfindungsgemäß erhaltene schwachsaure Kationenaustauscher zur Reinigung mit Wasser oder Dampf bei Temperaturen von 70 bis 180 °C, vorzugsweise von 105 bis 150 °C behandelt werden.

Gegenstand der vorliegenden Erfindung sind auch die monodispersen Kationenaustauscher vom Poly(meth)acrylsäure Typ erhältlich durch
a) Bereitstellen von verkapselten, perlförmigen Monomertropfen in einer kontinuierlichen, vorzugsweise wässrigen Phase, und gegebenenfalls Erwärmen dieser Phase auf Temperaturen ≥ 50 °C,
b) Versetzen dieser verkapselten, perlförmigen Monomertropfen mit Mischungen aus (Meth)acrylmonomeren, geeigneten Vernetzern, Initiatoren und gegebenenfalls Porogenen, gegebenenfalls unter Polymerisationsbedingungen, wobei die Mischung in die verkapselten Tropfen eindringt und gegebenenfalls auspolymerisiert
c) Polymerisieren der verkapselten Tropfen bei erhöhter Temperatur und
d) Hydrolysieren des enstandenen, monodispersen, vernetzten (Meth)acrylperlpolymerisats mit Säuren oder Laugen zu einem vernetzten, monodispersen Perlpolymerisat vom (Meth)-acrylsäure-Typ.

Die erfindungsgemäßen monodispersen Kationenaustauscher weisen überraschenderweise eine besondere osmotische und mechanische Stabilität auf. Aufgrund dieser günstigen Eigenschaft und der Monodispersität sind diese Kationenaustauscher für zahlreiche Anwendungen geeignet.

Die vorliegende Erfindung betrifft deshalb auch die Verwendung der erfindungsgemäßen monodispersen Kationenautauscher vom Poly(meth)acrylsäure-Typ
- zur Entfernung von Kationen, Farbpartikeln oder organischen Komponenten aus wässrigen oder organischen Lösungen,
- zur Enthärtung im Neutralaustausch von wässrigen oder organischen Lösungen,
- zur Reinigung und Aufarbeitung von Wässern der chemischen Industrie, der Elektronik-Industrie und aus Kraftwerken,
- zur Abtrennung und Reinigung von biologisch wirksamen Komponenten wie z.B. Antibiotika, Enzymen, Peptiden und Nukleinsäuren aus deren Lösungen, beispielsweise aus Reaktionsgemischen und aus Fermentationsbrühen,

Weiterhin können die erfindungsgemäßen Kationenaustauscher in Kombination mit gelförmigen und/oder makroporösen Anionenaustauschern zur Vollentsalzung wässriger Lösungen und/oder Kondensaten, insbesondere in der Trinkwasseraufbereitung, eingesetzt werden.

Die vorliegende Erfindung betrifft auch
- Verfahren zur Reinigung und Aufarbeitung von Wässern der chemischen Industrie, der Elektronik-Industrie und aus Kraftwerken
- Verfahren zur Entfernung von Kationen, Farbpartikeln oder organischen Komponenten aus wässrigen oder organischen Lösungen
- Verfahren zur Enthärtung im Neutralaustausch von wässrigen oder organischen Lösungen
- Verfahren zur Abtrennung und Reinigung von biologisch wirksamen Komponenten wie z.B. Antibiotika, Enzymen, Peptiden und Nukleinsäuren aus deren Lösungen, beispielsweise aus Reaktionsgemischen und aus Fermentationsbrühen
unter Einsatz der erfindungsgemäßen Kationenaustauscher vom Poly(meth)acrylsäure-Typ.

Neu und außerdem Gegenstand der vorliegenden Erfindung sind die aus Schritt c) erhältlichen vernetzten, makroporösen, monodispersen (Meth)acrylperlpolymerisate als Träger für Enzyme und die Verwendung des daraus erhaltenen Systemes als Enzymkatalysator.

Die vorliegende Erfindung betrifft daher die Verwendung der vernetzten, makroporösen, monodispersen (Meth)acrylperlpolymerisate als Enzymträger sowie die Verwendung dieses Systems als Enzymkatalysator.

Wie bereits oben beschrieben, können nach dem in situ seed/feed Verfahren in Schritt b) monodisperse, makroporöse, vernetzte, perlförmige Perlpolymerisate auf der Basis von (Meth)acrylsäureestern hergestellt werden. Wird bei deren Herstellung Kapselmasse eingesetzt, die eine Monomermischung aus Styrol, Divinylbenzol, Porogen und Initiator enthält, so entsteht nach Fütterung mit der weiteren Monomermischung unter polymerisierenden Bedingungen ein monodisperses, makroporöses, vernetztes Perlpolymerisat, das z.B. folgende Zusammensetzung zeigt:
20 Teile DVB 100 %ig
4 Teile Ethylstyrol
14 Teile Styrol
60 Teile Methylmethacrylat
20 Teile n-Butylmethacrylat

Hierzu wird bevorzugt Kapselmasse auf Basis von Styrol, Divinylbenzol und Porogen eingesetzt, da Kapselmasse auf der Basis von (Meth)acrylsäureestern/Porogen/Vernetzer alleine zur Zeit nicht verfügbar ist.

Die somit erhaltenen Perlpolymerisate können auch als Träger für Enyzme eingesetzt werden. Als Träger für Enzyme werden bevorzugt solche Perlpolymerisate eingesetzt, die auf der Basis von Mischungen von (Meth)acrylsäureestern gegebenenfalls unter Zusatz von Acrylsäureestern hergestellt werden.

Bevorzugt werden Gemische von Methylmethacrylat mit n-Butylmethacrylat oder n-Hexylmethacrylat oder 2-Ethylhexylmethacrylat eingesetzt.

Als Vernetzer, Porogene sowie andere Polymerisationsstoffe werden die oben genannten Stoffe eingesetzt.

Nach Herstellung (Polymerisation) des makroporösen, monodispersen Perlpolymerisates wird dieses entweder destillativ von den in den Perlen vorhandenen Porogen Restmengen befreit. Die Entfernung des Porogens kann auch nach anderen Verfahren wie der Elution des Perlpolymerisates mit Alkoholen, bevorzugt Methanol, Propanol, Isopropanol oder anderen Alkoholen, erfolgen oder auch durch Wasserdampfdestillation.

Die genannten, makroporösen, monodispersen Perlpolymerisate auf Basis von vernetzten (Meth)acrylsäureestern können als Basis (Träger) für Enzyme eingesetzt werden. Das entstandene mit Enzymen (immobilisierte) beladene Perlpolymerisat kann als Katalysator für Veresterungsreaktionen und Umesterungsreaktionen eingesetzt werden. So werden z.B. Terpenalkoholester, die als Duftstoffe eingesetzt werden, durch Reaktion von Terpenalkoholen wie Geraniol, L-Menthol, Phytol oder Linaol mit Säuren wie Essigsäure, Propionsäure, n-Buttersäure mit Aspergillus Niger Lipase als Katalysator hergestellt. Aus Glyceriden und Fettsäuren werden auf diese Weise mit Lipasen als Katalysator Glyceride der Fettsäuren hergestellt.

Estersynthesen mit Enzymen können bei Temperaturen zwischen Raumtemperatur und bis zu ca. 80 °C im physiologischen Milieu unter Normaldruck durchgeführt werden. Eine Vielzahl von Enyzmen kann als Katalysator eingesetzt werden. Insbesondere werden Enzyme der Klasse der Hydrolasen zu denen die Gruppe der Lipasen gehört, eingesetzt. Die Enzyme können Lipasen tierischen, pflanzlichen oder mikrobieller Herkunft sein. Dazu gehören Lipasen der Organismen Thizomucor, Humicolar oder Candida rugosa.

Die Immobilisierung der Enzyme auf dem erfindungsgemäßen Perlpolymerisat (Träger) kann durch Adsorbtion erfolgen oder dadurch, dass das Enyzm durch Reaktion mit Glutardaldehyd oder anderen Vernetzern mit sich und dem Träger vernetzt und dadurch auf dem Träger gebunden wird.

Die Veresterungs(umesterungs-)reaktionen können unter Rühren im Batch erfolgen oder auch in Säulenverfahren, wobei die Reaktanden kontinuierlich über das in der Säule auf Trägern immobilisierte Enzym geleitet wird.

Weltweit werden zur Zeit neue Verfahren als Alternativen für Brennstoffe und Autobenzin entwickelt. Hierzu gehört auch Biodiesel. Biodiesel ist der Methylester längerkettiger Fettsäuren. Erhalten wird dieser durch eine Umesterungsreaktion der Glycerinester der Fettsäuren, die aus Pflanzen gewonnen werden, mit Methanol. Als Katalyator dieser Reaktion wird Natronlauge eingesetzt.

Ausgangsmaterial des Biodiesels sind Öle pflanzlichen Ursprungs so z.B. Rapsöl. Rapsöl ist ein Gemisch der Glycerinester verschiedener Fettsäuren wie Palmitin-, Stearin, Öl-, Linol- und Erucasäuren.

Gefunden wurde, dass anstelle des Katalysators Natronlauge für die Umesterungsreaktion der Glycerinsäureester der Fettsäuren mit Methanol zu Biodiesel ein Enzymkatalysator auf der Basis erfindungsgemäßer monodisperser, makroporöser Perlpolymerisate, basierend auf vernetzten (Meth)acrylsäureestern, eingesetzt werden kann.

Die vorliegende Erfindung betrifft deshalb auch die Verwendung der monodispersen, makroporösen Perlpolymerisate auf Basis vernetzter (Meth)acrylsäureester bei der Herstellung von Brennstoffen, bevorzugt Autobenzin oder Biodiesel, sowie in Veresterungsreaktionen und Umesterungsreaktionen.

### Beispiele

### Beispiel 1 (nach in situ seed/feed Verfahren)

### Verfahrensschritte a-c)

### 1a) Herstellung eines Copolymerisates enthaltend 80 Gew. % Acrylnitrileinheiten - DVB wird als Emulsion dosiert

In einem 4 1 Glasreaktor wurden 103,4 g voll entsalztes Wasser und 53,6 g einer wässrigen Lösung, die gelöst 1,8 g Gelatine, 0,91 g Dinatriumhydrogenphosphat und 0,134 g Resorcin enthielt, vorgelegt. Dazu wurden nacheinander 21,86 Gramm Acrylnitril und 333,8 g voll entsalztes Wasser bei Raumtemperatur dosiert.

Zu dieser Vorlage wurden 627,9 g wässrige monodisperse Kapselmassendispersion, die 195 g monodisperse mikroverkapselte Monomertropfen enthaltend 113,4 g Styrol, 7,58 g technisches Divinylbenzol 80,0 %ig, 64 g Isododekan und 0,75 g Trigonox^{®} 21 s gegeben.

Die Dispersion wurde mit Stickstoff überlagert. In 2 Stunden wurde die Dispersion auf 73°C erwärmt und weitere 8 Stunden bei dieser Temperatur gerührt. Nach 30-minütigem Rühren bei 73°C wurden innerhalb von weiteren 6 Stunden zwei Zuläufe gleichzeitig dosiert.

Zulauf 1 bestand aus 706,7 g Acrylnitril.

Zulauf 2 bestand aus 47,8 g Divinylbenzol (DVB) 80 %ig, 71,8 g voll entsalztem Wasser und 0,24 g Aerosol OT. Die Dispersion wurde mit einem Ultratorax dispergiert und dann mit weiteren 759 g voll entsalztem Wasser verdünnt. Die gesamte Lösung wurde dosiert.

Nach beendeter Dosierung wurde in einer Stunde auf 95°C erhitzt und weitere 2 Stunden bei 95°C gerührt.

Divinylbenzol wurde als handelsübliches Isomerengemisch aus 80,0 Gew.-% Divinylbenzol und 20,0 Gew.-% Ethylstyrol eingesetzt.

Die monodispersen mikroverkapselten Monomertropfen wurden nach EP 0 046 535 A1 hergestellt und die Kapselwand des Saatpolymerisats bestand aus einem mit Formaldehyd gehärteten Komplexkoazervat aus Gelatine und einem Acrylamid/Acrylsäure-Copolymerisat. Die mittlere Teilchengrösse der mikroverkapselten Monomertropfen betrug 450 µm.

Das Gemisch wurde mit einer Rührerdrehzahl von 220 U/min gerührt. Der Ansatz wurde nach dem Abkühlen über ein 100 µm-Sieb mit voll entsalztem Wasser gewaschen und dann 18 Stunden bei 80 °C im Trockenschrank getrocknet. Man erhielt 898,5 g eines kugelförmigen Copolymerisats I mit einer mittleren Teilchengröße von 585 µm.

Der Stickstoffgehalt des Perlpolymerisates betrug 18,75 Gew.-%.

Hieraus berechnet sich ein Gehalt von 80,1 Gew. % Acrylnitrileinheiten im vernetzten Copolymerisat.

### 1b) Umsetzung des acrylnitrilhaltigen Coplymerisates zu einem schwach sauren Kationenaustauscher

### Apparatur: 6 1 Druckreaktor mit Druckhalteventil, Rührer, Thermostat, Pumpe

Im Reaktor wurden 1800 ml voll entsalztes Wasser und 500 g vernetztes Copolymerisat aus 1a) vorgelegt. Die Suspension wurde auf 150°C erhitzt. In 2 Stunden wurden 135 ml 50 gew.-%ige Natronlauge hinzu dosiert. Anschließend wurden in 1 1/4 Stunden weitere 708 ml 50 gew.-%ige Natronlauge hinzu dosiert. Danach wurde weiter 6 Stunden bei 150°C gerührt. Der Ansatz wurde abgekühlt. Das verseifte Polymerisat wurde abgelassen und auf der Nutsche mit voll entsalztem Wasser alkalifrei gewaschen.
Volumenausbeute : 1980 ml

Das Harz wurde in eine Säule überführt. Von oben wurden 10 Liter 4 gew.% ige wässrige Schwefelsäure in 4 Stunden überfiltriert. Anschließend wurde das Harz mit voll entsalztem Wasser schwefelsäurefrei gewaschen.
Volumenausbeute : 1220 ml
Totalkapazität : 5,16 mol/ l
Elementaranalytische Zusammensetzung :
Kohlenstoff: 60,0 Gew.- %
Wasserstoff: 6,4 Gew.-%
Sauerstoff: 32,5 Gew.-%
Reststickstoff: 1,1 Gew.-%
Originalstabilität : 99 % ganze Perlen
Quellungsstabilität : 98 % ganze Perlen
Spritzenstabilität : 99 % ganze Perlen
Walzstabilität : 98 % ganze Perlen
Mittlerer Perldurchmesser : 0,82 mm

### 1c) Reinigung des schwach sauren Kationenaustauschers im Autoklav mit Wasserdampf

1165 ml voll entsalztes Wasser und 1165 ml schwach saurer Kationenaustauscher in der Wasserstoffform wurden im Autoklav vorgelegt. Der Ansatz wurde auf 150°C erhitzt und weitere 5 Stunden bei dieser Temperatur gerührt. Dann wurde das Wasser über ein Frittenrohr aus dem Autoklav gedrückt und durch die gleiche Menge an frischem Wasser ersetzt. Das Gemisch wurde weitere 5 Stunden bei 150 °C gerührt.

Diese Reinigung wurde dreimal durchgeführt.

Der Autoklav wurde abgekühlt. Das Harz wurde auf einem Sieb mit voll entsalztem Wasser gewaschen
Harzvolumen : 1100 ml

### Beispiel 2 (nach in situ seed/feed Verfahren)

### 2a) Herstellung eines Copolymerisates enthaltend 70 Gew. % Acrylnitrileinheiten - DVB wird in der Acrylnitrilphase dosiert

In einem 4 1 Glasreaktor wurden 103,4 g voll entsalztes Wasser und 53,6 g einer wässrigen Lösung, die gelöst 1,8 g Gelatine, 0,91 g Dinatriumhydrogenphosphat und 0,134 g Resorcin enthielt, vorgelegt. Dazu wurden nacheinander 16,12 Gramm Acrylnitril und 333,8 g voll entsalztes Wasser bei Raumtemperatur dosiert.

Zu dieser Vorlage wurden 627,9 g wässrige monodisperse Kapselmassendispersion aus 195 g monodispersen mikroverkapselten Monomertropfen enthaltend 113,4 g Styrol, 7,58 g technisches Divinylbenzol 80,0 % ig , 64 g Isododekan und 0,75 g Trigonox^{®} 21 S gegeben.

Die Dispersion wurde mit Stickstoff überlagert. In 2 Stunden wurde die Dispersion auf 73°C erwärmt und weitere 8 Stunden bei dieser Temperatur gerührt. Nach 30-minütigem Rühren bei 73°C wurden innerhalb von weiteren 6 Stunden eine Mischung aus 521,25 g Acrylnitril und 35,3 g DVB 81,1 Gew.-% hinzu dosiert.

Nach beendeter Dosierung wurde in einer Stunde auf 80 °C erhitzt und eine weitere Stunde bei 80°C gerührt. Anschließend wurde auf 95 °C erhitzt und weitere 2 Stunden bei 95°C gerührt.

Divinylbenzol wurde als handelsübliches Isomerengemisch aus 81,1 Gew.% Divinylbenzol und 18,9 Gew.-% Ethylstyrol eingesetzt.

Die monodispersen mikroverkapselten Monomertropfen wurden nach EP 0 046 535 A2 hergestellt und die Kapselwand des Saatpolymerisats bestand aus einem mit Formaldehyd gehärteten Komplexkoazervat aus Gelatine und einem Acrylamid/Acrylsäure-Copolymerisat. Die mittlere Teilchengrösse der mikroverkapselten Monomertropfen betrug 450 µm.

Das Gemisch wurde mit einer Rührerdrehzahl von 220 U/min gerührt. Der Ansatz wurde nach dem Abkühlen über ein 100 µm-Sieb mit voll entsalztem Wasser gewaschen und dann 18 Stunden bei 80°C im Trockenschrank getrocknet. Man erhielt 701,7 g eines kugelförmigen Copolymerisats mit einer mittleren Teilchengröße von 557 µm.

Der Stickstoffgehalt des Perlpolymerisates betrug 17,70 Gew. %.

Hieraus berechnet sich ein Gehalt von 67,05 Gew. % Acrylnitrileinheiten im vernetzten Copolymerisat.

### 2b) Umsetzung des acrylnitrilhaltigen Coplymerisates zu einem schwach sauren Kationenaustauscher

Apparatur: 6 1 Druckreaktor mit Druckhalteventil, Rührer, Thermostat, Pumpe

Im Reaktor wurden 1800 ml voll entsalztes Wasser und 500 g vernetztes Copolymerisat aus 2a) vorgelegt. Die Suspension wurde auf 150°C erhitzt. In 2 Stunden wurden 127 ml 50 gew.-%ige Natronlauge dosiert. Anschließend wurden in 1,15 Stunden weitere 666 ml 50 gew.-%ige Natronlauge dosiert. Danach wurde weiter 6 Stunden bei 150°C gerührt. Der Ansatz wurde abgekühlt. Das verseifte Polymerisat wurde abgelassen und auf der Nutsche mit voll entsalztem Wasser alkalifrei gewaschen.
Volumenausbeute : 2000 ml

Das Harz wurde in eine Säule überführt. Von oben wurden 10 Liter 4 gew.%-ige wässrige Schwefelsäure in 4 Stunden überfiltriert. Anschließend wurde das Harz mit voll entsalztem Wasser schwefelsäurefrei gewaschen.
Volumenausbeute : 1280 ml
Totalkapazität : 3,41 mol/l
Elementaranalytische Zusammensetzung :
Kohlenstoff: 61,9 Gew. %
Wasserstoff: 6,4 Gew. %
Sauerstoff: 30,4 Gew. %
Reststickstoff: 1,1 Gew.%
Originalstabilität : 99 % ganze Perlen
Quellungsstabilität : 99 % ganze Perlen
Spritzenstabilität : 99 % ganze Perlen
Walzstabilität : 99 % ganze Perlen
Mittlerer Perldurchmesser : 0,76 mm

### 2c) Reinigung des schwach sauren Kationenaustauschers im Autoklav mit Wasserdampf

1225 ml voll entsalztes Wasser und 1225 ml schwach saurer Kationenaustauscher in der Wasserstoffform wurden im Autoklav vorgelegt. Der Ansatz wurde auf 150°C erhitzt und weitere 5 Stunden bei dieser Temperatur gerührt. Dann wurde das Wasser über ein Frittenrohr aus dem Autoklav gedrückt und durch die gleiche Menge frischen Wassers ersetzt. Das Gemisch wurde weitere 5 Stunden bei 150 °C gerührt.

### Diese Reinigung wurde dreimal durchgeführt.

Der Autoklav wurde abgekühlt. Das Harz wurde auf einem Sieb mit voll entsalztem Wasser gewaschen.
Harzvolumen : 1160 ml
Totalkapazität : 3,54 mol/ l

### Untersuchungsmethoden:

### Bestimmung der Totalkapazität des Harzes

In einem 100 ml Messzylinder wurden unter voll entsalztem Wasser auf einem Vibriertisch 55 ml Austauscher in der Lieferform eingerüttelt und in ein Filterrohr gespült. 300 ml 15%ige Salzsäure wurden innerhalb von 60 Minuten hinzudosiert. Anschließend wurde mit VE-Wasser gewaschen, bis das Eluat neutral war. Von dem Harz wurden 50 ml eingerüttelt und in ein Filterrohr gespült. 600 ml In Natronlauge wurden innerhalb von 60 Minuten hinzudosiert und das Eluat wurde in einem 1 Liter Erlenmeyerkolben aufgefangen. Das Harz wurde mit 200 ml VE-Wasser gewaschen, wobei das Eluat ebenfalls in dem 1 Liter Erlenmeyerkolben aufgefangen wurde. Der Erlenmeyerkolben wurde mit VE-Wasser bis zur Marke aufgefüllt und gemischt. 50 ml Lösung wurden in einem Becherglas mit 50 ml VE-Wasser verdünnt und unter Verwendung einer pH-Elektrode mit 0,1 n Salzsäure bis pH 4,3 titriert.

Totalkapazität (TK): die Totalkapazität ist ein Maß für die Menge saurer Gruppen im Harz.

### Dimension : mol saure Gruppen pro Liter Harz

### Bestimmung der TK

(30 - Verbrauch) / 2,5 = mol/Liter Harz in der sauren Form VE-Wasser oder voll entsalztes Wasser im Sinne der vorliegenden Erfindung ist gekennzeichnet, indem es eine Leitfähigkeit von 0,1 bis 10 µS besitzt, wobei der Gehalt an gelösten oder ungelösten Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

## Patentansprüche

1. Verfahren zur Herstellung von Kationenaustauschern vom Poly(Meth)acrylsäure-Typ, **dadurch gekennzeichnet, dass** man
a) verkapselte, perlförmige Monomertropfen in einer kontinuierlichen, vorzugsweise wässrigen Phase bereitstellt und gegebenenfalls diese Phase auf Temperaturen ≥ 50 °C erwärmt,
b) diese verkapselten perlförmigen Monomertropfen mit Mischungen aus (Meth)acrylmonomeren, Vernetzern, Initiatoren und gegebenenfalls Porogenen gegebenenfalls unter Polymerisationsbedingungen versetzt, wobei die Mischung in die verkapselten Tropfen eindringt, und im Falle des Zusatzes unter Polymerisationsbedingungen anpolymerisiert,
c) die verkapselten Tropfen bei erhöhter Temperatur polymerisiert,
d) das entstandene, vernetzte (Meth)acrylperlpolymerisat mit Säuren oder Laugen zu einem vernetzten Perlpolymerisat vom Poly(Meth)acrylsäure-Typ hydrolysiert.

2. Verfahren gemäß Anspruch 1, **dadurch gekennzeichnet, dass** die Schritte b) und c) ein oder mehrmals wiederholt werden.

3. Verfahren gemäß der Ansprüche 1 oder 2, **dadurch gekennzeichnet, dass** die in Verfahrensschritt a) einzusetzenden Monomertropfen in monodisperser Form eingesetzt werden und man vernetzte monodisperse Perlpolymerisate vom Poly(Meth)acrylsäure-Typ enthält.

4. Verfahren gemäß Anspruch 3, **dadurch gekennzeichnet, dass** die im Verfahrensschritt a) bereitgestellten monodispersen, perlförmigen, verkapselten Monomertropfen durch eine Kombination von Verdüsung (Jetting) und/oder Schwingungsanregung und Microverkapselung erzeugt werden.

5. Verfahren gemäß der Ansprüche 3 oder 4, **dadurch gekennzeichnet, dass** die monodispersen, perlförmigen Monomertropfen mit einem Komplexkoazervat mikroverkapselt sind.

6. Verfahren gemäß der Ansprüche 1 bis 5, **dadurch gekennzeichnet, dass** die perlförmigen, verkapselten Monomertropfen Styrol und Divinylbenzol enthalten.

7. Verfahren gemäß der Ansprüche 1 bis 6, **dadurch gekennzeichnet, dass** als (Meth)acrylmonomere (Meth)acrylester, (Meth)acrylamide, (Meth)acrylnitril, Acrylsäure, Methacrylsäure, Arylsäurechlorid, Methacrylsäurechlorid allein oder im Gemisch eingesetzt werden.

8. Verfahren gemäß der Ansprüche 1 bis 7, **dadurch gekennzeichnet, dass** als Vernetzer multifunktionelle ethylenisch ungesättigte Verbindungen eingesetzt werden.

9. Verfahren gemäß der Ansprüche 1 bis 8, **dadurch gekennzeichnet dass** als Porogen Methylisobutylketon, Hexan, Cyclohexan, Octan, Isooctan, Isododecan, n-Butanol, 2-Butanol, Isobutanol, t-Butanol, Octanol allein oder im Gemisch eingesetzt wird.

10. Monodisperse Kationenaustauscher vom Poly(meth)acrylsäure-Typ erhältlich nach den Ansprüchen 1 bis 9, **dadurch gekennzeichnet, dass** das Verhältnis aus dem 90 %-Wert (∅(90)) und dem 10 %-Wert (∅(10)) der Volumenverteilung, ∅(90)/∅(10), kleiner oder gleich 1,25 ist.

11. Verwendung der monodispersen Kationenaustauscher vom Poly(meth)acrylsäure-Typ gemäß Anspruch 10
- zur Entfernung von Kationen, Farbpartikeln oder organischen Komponenten aus wässrigen oder organischen Lösungen,
- zur Enthärtung im Neutralaustausch von wässrigen oder organischen Lösungen,
- zur Reinigung und Aufarbeitung von Wässern der chemischen Industrie, der Elektronik-Industrie und aus Kraftwerken,
- zur Entfärbung und Entsalzung von Molken, Gelatinedünnbrühen, Fruchtsäften, Fruchtmosten und wässrigen Lösungen von Zuckern,
- zur Abtrennung und Reinigung von biologisch wirksamen Komponenten wie z.B. Antibiotika, Enzyme, Peptide und Nukleinsäuren aus deren Lösungen.

12. Verwendung der vernetzten, makroporösen, monodispersen (Meth)acrylperlpolymerisate aus Schritt c) als Träger für Enzyme und des daraus erhaltenen Systems als Enzymkatalysator.

13. Verwendung des Enzymkatalysators aus Anspruch 12 bei der Herstellung von Brennstoffen sowie in Veresterungsreaktionen und Umesterungsreaktionen.

14. Verwendung gemäß Anspruch 13, **dadurch gekennzeichnet, dass** es sich bei den Brennstoffen um Autobenzin oder Biodiesel handelt.
